# EUROPEAN PATENT APPLICATION

(11) **EP 1 491 328 A1**
(43) Date of publication of application: **29.12.2004**
(21) Application number: 03291534.0
(22) Date of filing: 23.06.2003
(51) Int. Cl.: B32B 15/08, C09J 123/00, C08J 5/12

(54) **A metal-cured polyethylene-metal laminate**

(71) Applicant: Usinor, 92800 Puteaux (FR); Thyssen Krupp Stahl AG, 40211 Düsseldorf (DE)
(72) Inventor: Calvez, Cédric, 93160 Noisy le Grand (FR); Gauriat, Antoine, 92340 Bourg la Reine (FR); Schmit, Francis, 60250 Ansacq (FR); Nazikkol, Cetin, 47169 Duisburg (DE); Filthaut, Christoph, 44227 Dortmund (DE); Smith, Roland, 95640 Brignancourt (FR); Pac, Jiri, Brno 62100 (CZ)
(74) Representative: Bernasconi, Jean Raymond

(57) **Abstract**

The invention concerns a metal laminate comprising between two outer metal sheets an adhesive polymer layer, characterised in that the adhesive polymer layer comprises cross-linked polyethylene or a copolymer thereof, grafted with an unsaturated carboxylic acid and/or a derivative thereof. The invention further concerns a process for the manufacture of such a metal laminate and the use of such metal laminates for the manufacture of automotive body parts.

## Description

The present invention concerns metal laminates, in particular metal laminates that may undergo a subsequent forming step and cataphoresis step. It also concerns their use, notably for the manufacture of automotive body parts and in the construction sector.

Metal laminates comprise two outer metal sheets between which is interposed a polymer layer.

Generally, the main advantage of metal laminates with respect to metal sheets is that they allow the reduction of weight while meeting the specifications regarding stiffness. Such an advantage is particularly interesting in automotive applications since it contributes to a reduction of the fuel consumption of the vehicle.

Metal laminates, in particular those used for the manufacture of automotive body parts, have to meet severe requirements regarding the stiffness, both during forming and in service. The forming steps are in particular those of deep drawing, embossing, bending and hemming. The metal laminates should show good ductility at low temperatures in order to allow forming at these temperatures and ensure stiffness and mechanical strength, in particular choc resistance, at the temperatures of service that is between -20 and 80°C.

The metal laminate should however also present a sufficient heat resistance in order to allow high temperature treatments, in particular cataphoresis.

Further, the intermediate layer should have sufficient adhesive strength with respect to the outer metal layer so that the metal laminate presents the cohesion strength as required. For example, the specifications of the automotive industry require an adhesive strength, which is between 1 and 5 decaN/cm depending on the use of the piece.

Metal laminates with a polypropylene polymer layer are known, for example from EP 598 428. They are satisfactory in terms of rigidity and forming behaviour. However, these metal laminates do not present a satisfying heat resistance. Indeed, polypropylene has a fusion temperature around 160°C, which is insufficient with regard to some subsequent treatment steps.

One of the frequent subsequent treatment steps for metal laminates is the painting by cataphoresis. Cataphoresis implies the exposure of the metal laminates to temperatures between 160 and 200°C. Also, the laminate may undergo a previous anti-corrosion treatment. Such a treatment generally implies a heat treatment at temperatures between 140 and 220°C for 15 to 30 minutes in order to cure the applied coating layers.

The fusion of the polymer at these temperatures leads to a drop in the tensile modulus of the layer, which may go down to 0.01 MPa. The laminate then might sag under its own weight, yielding important geometrical deformations of the laminate. Further, the polymer might run and/or shrink at the extremities of the laminate, leading to unacceptable defects.

This problem is overcome by using an intermediate layer comprising a continuous woven fleece of thermoplastic polymer fibres impregnated with a thermoset polymer material. The thermoset polymer material also ensures adherence to the metal sheets. Such laminates present a good formability with a good heat resistance.

These laminates however present some drawbacks due to irregularities of the fleece thickness and the adhesion to the metal sheets. Further, the microstructure of the textile fleece may be imprinted to the outer natural sheet during drawing. Such a surface appearance of laminate is incompatible with a use for the manufacture of automotive body parts.

Further to these drawbacks, the manufacturing process of these laminates is unsatisfactory because the adhesion step of the pre-impregnated fleece to the outer metal sheets is slow, leading to a low productivity.

The aim of the present invention is hence to provide metal laminates which meet the above requirements while having a heat resistance and which show a good surface appearance after forming. Another aim is to provide metal laminates which may be used at temperatures between -20°C and 220°C. A further aim of the present invention is to provide metal laminates that may be manufactured with a high productivity.

It has now been found that an intermediate polymer adhesive layer comprising a particular cross-linked polyethylene polymer grafted with specific moieties could provide metal laminates solving the above problems.

In accordance with the present invention, there is provided a metal laminate comprising between two outer metal sheets an adhesive polymer layer, characterised in that the adhesive polymer layer comprises cross-linked polyethylene grafted with an unsaturated carboxylic acid and/or an anhydride of an unsaturated carboxylic acid and/or an ester of an unsaturated carboxylic acid.

Under the term "metal laminate" is understood in the present invention a sandwich having at least two outer metal sheets and between the outer metal sheets at least one polymer layer.

Preferably, the intermediate polymer layer is homogeneous. However, it may be useful to use an inhomogeneous polymer layer. In that respect, it is in particular possible to use a polymer layer comprising two outer layers of one polymer material and one intermediate layer of another polymer material. Using this type of structure, it is possible to use for instance a polymer material with superior adhesive properties with respect to the metal for the outer polymer layers, while using another material having other advantageous properties, such as stiffness, for the inner polymer layer.

Generally, the outer metal sheets of the metal laminate will have the same surface dimensions. Such laminates are known in particular as sandwich sheets. However, it is also possible to prepare metal laminates according to the invention where the metal sheets do not have the same surface dimensions. Such laminates are known in particular as patchwork sheets. Patchwork sheets comprise a first metal sheet that is only locally reinforced by a second metal sheet fixed to the first sheet by an intermediate adhesive polymer layer. They are advantageous in that they allow an even further reduction of weight for pieces exposed only locally to high stress.

Hence, the present invention also encompasses metal laminates wherein the surface of the first outer metal sheet is greater than the surface of the second outer metal sheet.

The metal sheets of the metal laminate are preferably made of steel, although other metals such as aluminium, copper, nickel alloys and magnesium may also be contemplated for one or both of the outer metal sheets.

The grade of steel to be used depends mainly on the applications envisaged. In case the metal laminates are to be used for the manufacture of automotive parts, typical steel grades used are grade ES (EN DC 01 to DC06) and grade HLE (EN H 240 LA to H 400 LA).

The metal sheets used for the metal laminates will typically have a thickness of 0.1 mm to 1.5 mm.

The outer metal sheets of the metal laminate may be uncoated. Generally, they will however bear on one or both sides one or more coatings in order to improve their properties.

Such coatings may be produced for example by galvanisation or plating. These coatings include then in particular metallic alloys containing zinc, aluminium, tin or chromium.

Such coatings may also result from surface treatments such as phosphating, chromating, and alkaline oxidation. They thus include mineral compounds such as phosphor and chromium compounds.

Other coatings of the metal sheets may be based on organic compounds, such as primers, pre-paintings, pre-varnishes or finishes or other thin film coatings such as oils.

According to the invention, the adhesive polymer layer of the metal laminate comprises cross-linked grafted polyethylene or copolymer thereof.

Cross-linked polyethylene, also referred to as PEX, is advantageous in that it has a better resistance to high temperature than polyethylene, which is not cross-linked, and therefore confers an enhanced heat resistance to the metal laminate. As a matter of fact, when the cross-linked polyethylene is heated, it does not melt, but only softens. It also has a low glass transition temperature, which allows the forming to be carried out at low temperature.

The cross-linked polyethylene present in the adhesive polymer layer may be linear or branched and includes in particular ultra low density, very low density, low density, medium density or high-density polyethylene. Ultra low density, very low density and low density polyethylene have elastomeric properties, contrary to medium and high-density polyethylene.

The choice of cross-linked polyethylene will mainly depend on the desired properties of the polymer, in particular glass transition and fusion temperature, rigidity, density, and crystallinity.

These properties can be obtained or modified by varying the proportion and the nature of the polyethylene in the composition. Apart from the composition, the molecular weight, polymerization catalyst and the polymerization conditions may be modified, all of which is within the knowledge of those skilled in the art.

The adhesive polymer composition preferably comprises more than 50% in weight, and preferably 80 to 95 % in weight of cross-linked grafted polyethylene.

According to the type of metal laminate that will be manufactured, the adhesive polymer composition will have to show more or less rigidity.

In the case of manufacturing a sandwich sheet, that is, when the two outer metal sheets have the same size, the adhesive polymer composition is preferably prepared using 50 to 80 % in weight of high-density polyethylene (HDPE) with respect to the total polymer composition. Indeed, a composition comprising less than 50% HDPE will generally not present suitable mechanical properties, in particular sufficient rigidity. However, compositions comprising more that 80% in weight of HDPE are expected to lack sufficient adhesion properties.

The use of high-density polyethylenes with different melt indices has been found to be advantageous in that it facilitates the extrusion of the polymer composition. As a matter of fact, the grafted polyethylene is very viscous and the incorporation of polyethylene with a high melt index in the polymer reduces its viscosity.

In order to improve the adhesion properties of the polymer composition, elastomers may be present in the composition. However, their presence should be limited in order to maintain the rigidity. In that respect, a preferred polymer composition is prepared using 15 to 45 % in weight of elastomers with respect to the total polymer composition. Suitable elastomers include low-density polyethylene (LDPE), ultralow density polyethylene (ULDPE) and copolymers of ethylene. Examples of these latter elastomers include ethylene-propylene copolymers, ethylene-hexene copolymers, ethylene-octene copolymers and ethylene-propylene-diene copolymers.

A particularly advantageous polymer composition for a sandwich sheet is prepared using 40% in weight of HDPE with a melt index of 7 g/10 minutes, 20% in weight of HDPE with a melt index of 65 g/10 minutes and 30% in weight of ULDPE with a melt index of 5 g/10 minutes, the remainder being made up preferably of a reactive copolymer and epoxy resin, as discussed hereunder.

In the case of manufacturing a patchwork sheet, which is a metal sheet locally reinforced with a smaller size metal sheet, the requirements regarding rigidity are generally lower. Therefore, the proportion of HDPE may be from 0 to 80 % in weight with respect to the total polymer composition. Also, the adhesive polymer composition for these applications may comprise a higher proportion of elastomers, and even exclusively elastomers. In that respect, a preferred polymer composition comprises 20 to 95 % in weight elastomer with respect to the total polymer composition to be grafted and crosslinked.

However, cross-linked polyethylene as such does not have sufficient adhesive properties to ensure a satisfying cohesion between the polymer layer and the outer metal sheets.

In order to confer better adhesive properties to the polymer, the polyethylene is thus grafted before crosslinking with polar moieties.

According to the invention, the polyethylene is grafted with unsaturated carboxylic acids, and/or a derivative thereof. Such derivatives are in particular the anhydrides and / or esters of unsaturated carboxylic acids.

Suitable unsaturated carboxylic acids may contain 1 to 6 carboxylic acid groups, and include in particular maleic acid, fumaric acid, mesaconic acid, citraconic acid, aconitric acid and itaconic acid, 5-norbornene-2,3-dicarboxylic acid, 1,2,3,6-tetrahydrophthalic acid, acrylic acid and methacrylic acid, maleic acid being preferred.

Suitable esters include, for example, the esters derived from the above acids with alcohols having from 1 to 18 carbon atoms, including methanol, ethanol, propanol, isopropanol, butanol, sec. butanol, tert. butanol, decanol, 2-ethylhaxanol, and octadecanol.

The carboxylic groups of the acid may be totally or partially esterified.

Suitable esters include in particular methyl, ethyl, dimethyl maleate, dimethyl fumarate, methyl ethyl maleate, dipropyl maleate, dibutyl maleate, methyl (meth)acrylate, 2-butyl (meth)acrylate, 2-ethylhexyl (meth)acrylate, decyl (meth)acrylate, octadecyl (meth)acrylate.

The polyethylene to be grafted may be reacted with 0.01 to 10 %, preferably 0.5 to 1.5% of the carboxylic acid and/or derivative thereof in weight with respect to the total weight of the polymer composition. After the reaction, the excess carboxylic acid and/or derivative thereof is preferably eliminated from the composition.

It should be noted that an excess presence of grafted moieties might interfere with subsequent crosslinking.

The amount of grafting may be checked with an IR analysis.

The grafted polyethylene useful in the present invention can be prepared by reacting the polyethylene with varying amounts of the unsaturated carboxylic acid, and/or a derivative thereof in presence of a catalyst such as a free radical initiator.

The choice of the free radical initiators used for grafting the polyethylene is not critical for the invention. For examples, any conventional radical initiators such as organic peroxo compounds and azonitriles may be used.

Examples of the organic peroxo compounds are alkyl peroxides such as diisopropyl peroxide, ditertiary butyl peroxide and tertiary butyl hydroperoxide; aryl peroxide such as dicumyl peroxide and cumyl hydroperoxide; acyl peroxide such as dilauryol peroxide; ketone peroxide such as methyl ethyl ketone peroxide and cyclohexanone peroxide. Examples of azonitriles are azo bisbutyronitrile and azobisisopropionitrile.

The polymer composition preferably also contains an epoxy resin in order to improve the adhesion to the metal sheets.

Examples of such epoxy resins include phenol types such as those based on the diglycidyl ether of bisphenol A, on polyglycidyl ethers of phenolformaldehyde novolac or cresol-formaldehyde novolac, on the triglycidyl ether of tris(p-hydroxyphenol)methane, or on the tetraglycidyl ether of tetraphenylethane; amine types such as those based on tetraglycidylmethylenedianiline or on the triglycidyl ether of p-aminoglycol; cycloaliphatic types such as those based on 3,4-epoxycyclohexylmethyl-3,4-epoxycyclohexane carboxylate.

Preference is given to epoxy resins, which are derivatives of bisphenol A.

It should be noted that epoxy resins are generally represented by a single, unequivocal structural formula. The skilled person will know that this should be taken to include deviating products resulting from side reactions occurring during epoxy resin preparation. As these side products constitute a normal component of cured epoxy resins, they likewise constitute a normal component of the resins according to the invention.

Generally, the polymer composition contains 0.1 to 5%, in particular 1.5 to 2.5% of epoxy resin, based on the total weight of the composition.

The polymer composition may further contain other reactive copolymers in order to enhance the adhesion properties. Such copolymers are in particular copolymers of styrene and unsaturated carboxylic acids, and / or derivatives thereof, such as indicated above for the grafting of the polyethylene. A particularly preferred copolymer is styrene-maleic acid anhydride (SMA).

These copolymers have been described, *inter alia*, in Encyclopedia of Polymer Science and Engineering Vol. 9 (1987), page 225 ff. These copolymers are commercially available in two types. One type comprises mostly high-molecular weight copolymers (MW generally higher than 100,000 for instance, 1,000,000). These are in fact thermoplastics. The other type of SMA copolymers, on the other hand, which have a molecular weight in the range of about 1400 to about 50,000 and an anhydride content of more than 15% by weight, are pre-eminently suited to be used in the invention. Preference is also given to SMA copolymers having a molecular weight in the range of 1400 to 10,000. Examples of such copolymers include the commercially available SMA 1000, SMA 2xd000, SMA 3000, and SMA 4000. These copolymers have a styrene-maleic acid anhydride ratio of 1:1, 2:1, 3:1, and 4:1, respectively, and a molecular weight ranging from about 1400 to about 2000. Mixtures of these SMAs may also be used.

Preference is given to 0.5 to 10 % of styrene copolymer with respect to the total weight of the composition, 3 to 6 % of the total weight of SMA being particularly preferred.

Further, the polymer composition may contain components well known in the art to further enhance the properties of the polymer composition.

For example, additives such as anti-static agents, pigments, colorants and the like can be incorporated into the polymer composition. Additionally, processing characteristics can be improved by incorporating lubricants or slip agents into the blends. All of these additives are generally used in relatively small amounts, usually less than 3 % by weight with respect to the total polymer composition.

The polymer composition may be prepared according to conventional processes known as such. In particular, the polymer composition may be prepared by mixing the components in an extruder followed by granulation.

In order to enhance heat resistance, the polymer composition comprising grafted polyethylene is crosslinked.

Several crosslinking processes are known. From these may be mentioned in particular crosslinking using an organosilane compound.

Preferably, the organosilane compound is chosen from vinylalcoxysilanes, dialcoxysilanes, trialcoxysilanes or tetraalcoxysilanes. Particularly appropriate in this respect are 3-aminopropyltriethoxysilane, methyltriethoxysilane, 3-aminopropylmethyl-diethoxysilane, tetraethoxysilane or 3-isocyanatopropyltriethoxysilane.

The organosilane compound is preferably added during grafting of the polyethylene and mixing with other components, if present.

The organosilane compound then reacts with the polyethylene to yield polyethylene grafted with silane groups which, when hydrolyzed, give rise to a crosslinking of the polymer chains.

Generally, an amount of organosilane compound of 0.1 to 2% in weight of the total composition is appropriate.

The silane crosslinking is obtained by hydrolysis of the silane groups. This may be obtained for example by passing the polymer through a bath of water. It is however also possible to cross-link the polymer by exposure to the air humidity.

Another possible crosslinking process involves the use of an organic peroxo compound. Such organic peroxo compound may be chosen for example from dicumyle peroxide and tri-tert.butyl peroxide.

According to a further crosslinking process, the grafted polyethylene is cross-linked using high energy radiation such as electron beam and gamma rays.

However, crosslinking using organosilane compounds is preferred.

The degree of crosslinking of the grafted polyethylene is determined by measuring the gel content, that is the fraction in weight of the polymer composition that is insoluble in xylene at its boiling point.

Preferably, the cross-linked grafted polyethylene has a gel content of at least 15% in weight, preferably higher than 30 % in weight.

It is to be noted that the gel content may vary upon transformation of the polymer composition. The reason is mainly that further crosslinking of the reactive groups under heat occurs.

Such gel content values ensure that the adhesive polymer layer presents sufficient stiffness along with satisfying adhesion properties.

As already pointed out above, in a preferred embodiment of the invention, the adhesive polymer composition comprises a layer of standard cross-linked non grafted polyethylene between two outer adhesive polymer layers comprising cross-linked grafted polyethylene. Such a structure has advantages in terms of heat resistance, stiffness and costs. For example, the tensile modulus at 200 °C of the film prepared with this type of adhesive polymer composition comprising three layers is higher than the tensile modulus at 200 °C of the film prepared with an adhesive polymer composition comprising a sole layer of cross-linked grafted polyethylene, because of the presence of standard cross-linked non grafted polyethylene.

As a matter of fact, when the polyethylene according to the invention is co-grafted with a silane compound and with an unsaturated carboxylic acid, an anhydride and /or an ester thereof, its cross-linking degree is lower than a standard polyethylene that is solely grafted with a silane compound, and it shows a lower resistance against high temperature. For example, the crosslinked grafted polyethylene according to the invention has a gel content range of 30 to 40 %, and the standard cross-linked polyethylene has a gel content in the range of 70 to 80 %.

The metal laminates according to the invention may be prepared by a process comprising the steps consisting in :
a. Providing a first and a second metal sheet;
b. Applying a polymer composition comprising cross-linked polyethylene grafted with an unsaturated carboxylic acid, and/or a derivative thereof onto the first metal sheet;
c. Applying the second metal sheet onto the polymer layer applied onto the first metal sheet to obtain a metal laminate; and
d. Heating the metal laminate to complete the adhesion.

Preferably, the polymer composition is previously extruded to form a polymer film. However, it is also possible to extrude the polymer film directly onto the first metal sheet, or to laminate the polymer film between the two metal sheets in one step.

The extrusion is preferably carried out using a mono screw extruder.

The thickness of the adhesive polymer film is preferably around 0.05 to 5 mm, preferably 0.2 to 1 mm.

The laminate is preferably exposed to a temperature of between 180 and 220°C in order to complete the adhesion.

The metal laminates thus prepared are useful for example in the construction industry and in particular in the manufacture of automotive body parts such as hoods, roofs, doors, wings and rear doors.

The invention will be explained more in detail based on the following examples.

### EXAMPLE 1 : Crosslinking by organosilane compounds

The polymer composition is prepared by extrusion of two components A and B. Component A is a polyethylene/elastomer blend modified with an organosilane crosslinking agent and adhesive additives. Component B is a concentrate of catalyst accelerating the crosslinking process.

### A. Preparation of component A

Component A was prepared by extruding with a double screw the HDPE (Eraclene MP 90, melt index flow (MFI) of 7 g/10 minutes, density of 0.960, available from Polymeri Europa and HDPE 63053 N, MFI 65, density of 0.953, available from Dow) with the elastomer which is an ultralow density polyethylene (Engage 8200, MFI 5, density of 0.87, available from Dow) with the maleic acid anhydride, the organosilane crosslinking agent (vinyltrimethoxy silane containing 0.1 % in weight of organic peroxide, Silmix 22006 from Silix) and the processing aid (Dynamar FX 9613 from DuPont Dow Elastomers).

The styrene maleic acid anhydride copolymer (SMA 1000P from Atofina) was added by way of a first side feeder.

The epoxy resin (Araldite ECN 9699CH from Vantico) was added by way of a second side feeder.

A processing aid (fluoropolymer) was also added to the composition in order to decrease its viscosity.

The mixture was then subjected to melt devolatilisation, that is extrusion under vacuum in order to eliminate excess of maleic acid anhydride before granulation .

The obtained granules were dried at 90°C for about 30 minutes before storing away from moisture.

The amounts of the different constituents of component A are indicated in Table 1 hereunder.

**Table 1:**

| Composition of component A | |
|---|---|
| | Parts per 100 |
| HDPE MFI 7 | 40.85 |
| HDPE MFI 65 | 20 |
| ULDPE | 30 |
| Styrene maleic acid anhydride copolymer | 5 |
| Processing aid | 0.05 |
| Maleic acid anhydride | 0.85 |
| Epoxy resin | 2 |
| Silane crosslinking agent | 1.25 |

### B. Preparation of component B

Component B was prepared by extruding. EVA (Escorene 02020, available from Exxon Mobil) with linear low-density polyethylene (Escorene LL 6101 RQ, available from Exxon Mobil) and the catalyst (dibutyltinlaurate (DBTL) available from Silix) along with antioxidants Irganox 1330 and Irgafos 168 (available from Ciba Geigy).

The extrudate is then treated as component A to form granules. The composition of component B is resumed in Table 2 hereunder.

**Table 2:**

| Composition of component B | |
|---|---|
| | Parts per 100 |
| Escorene 02020 | 90.4 |
| Escorene LL 6101 RQ | 4.4 |
| DBTL | 0.2 |
| Irganox 1330 | 2.5 |
| Irganox 168 | 2.5 |

### C. Preparation of the crosslinked polyethylene composition

95 parts of granules of component A and 5% of granules of component B were mixed together just before extrusion in order to avoid premature crosslinking and subsequent extrusion difficulties. Then, the components were extruded to form a film. The extruded film was then moisture cross-linked by submitting to air humidity for 7 to 15 days.

### EXAMPLE 2 : Crosslinking by peroxo-compounds

The polymer composition is prepared by crosslinking a blend comprising HDPE and ULDPE with 1 % in weight of peroxo-compounds (available from Atofina) based on the total weight of the composition in a double screw extruder.

The mixture was then submitted to melt devolatisation before granulation.

The obtained granules were dried at 90°C for about 30 minutes before storing away from moisture.

Then, the composition was extruded to form a film.

The amounts of the different constituents of the polymer composition cross-linked with peroxo-compound are indicated in Table 3 hereunder.

**Table 3:**

| Composition of polyethylene cross-linked with peroxo-compound | |
|---|---|
| | Parts per 100 |
| HDPE MFI 7 | 41.1 |
| HDPE MFI 65 | 20 |
| ULDPE | 30 |
| Styrene maleic acid anhydride copolymer | 5 |
| Processing aid | 0.05 |
| Maleic acid anhydride | 0.85 |
| Epoxy resin | 2 |
| Peroxo-compound | 1 |

### EXAMPLE 3 : adhesive polymer composition comprising three layers

The adhesive polymer composition comprises a layer of standard cross-linked non-grafted polyethylene between two outer adhesive polymer layers constituted of the composition described in example 1. The standard cross-linked polyethylene comprises 98.75 % in weight of PEHD (Eraclene MP 90, MFI 7, density of 0.960, available from Polymeri Europa) and 1.25 % in weight of an organosilane crosslinking agent (vinyltrimethoxy silane containing 0.1 % in weight of organic peroxide, Silmix 22006 from Silix). The thickness of the outer polymer layers is 10 to 60 µm.

### EXAMPLE 4 : polymer layer according to the prior art

The metal laminate comprising a polypropylene core is prepared by laminating a polypropylene film (Appryl 3020, MFI 1.9, density 0.905, available from Atofina) between two metal sheets, which were previously coated with a thin layer of an epoxy primer comprising grafted polypropylene.

The different adhesive polymer compositions were characterized by measuring the ductility, tensile modulus and gel content. The test procedures are described hereafter.

### a. Ductility

The ductility of the polymer composition is measured using a standard elongation test (according to NF EN ISO 527).

The polymer film is cut into samples having a total length of 150 mm and a width of 20 mm at the extremities, the central part of a length of 80 mm having a width of 10 mm.

The sample is placed between the jaws of an elongation measuring apparatus INSTRON 45.05. The apparatus imparts a traction at a constant speed of 50 mm/min. The respective elongation of the sample at break indicates the ductility of the material.

The ductility is considered satisfying when it is at least equal to the ductility of steel, that is typically 40%.

### b. Tensile modulus

The tensile modulus indicates the stiffness of the polymer film. It is measured at 200°C using a dynamic mechanical and thermal analysis apparatus (Rheometric MK_{II}).

A sample of the polymer film of 4,75 cm x 0,5 cm is inserted between the jaws of the apparatus. Then, a tensile stress is imparted to the sample, which is sufficiently low to ensure elastic deformation. The force opposed by the film to restore its initial form is measured. This test is repeated by cycles, generally of 1 Hz, while heating the sample at a rate of 2°C/min to measure the values for a temperature range of -50 to 250°C.

### c. Gel content

The gel content indicates the fraction of insolubles in a solvent with respect to the total composition. The cross-linked fraction of the polymer is insoluble in xylene at its boiling point whereas the non cross-linked fraction is soluble.

The gel content is determined by weighing 1 g of the polymer into a Soxlet apparatus containing xylene. The temperature is then raised up to the boiling point of xylene for 2 hours. The insoluble fraction of the polymer is weighed and the fraction in mass corresponds to the gel content.

### D. Preparation of the laminate

The metal laminate was prepared by heat laminating an extruded film of cross-linked grafted polyethylene as obtained in the previous sections onto the metal sheet made of an interstitial free titanium steel sheet which was subjected to a chromatation treatment (granodine 1415AD, available from Henkel) having a thickness of 0,25 mm at a temperature of 190°C.

### E. Tests of the metal laminates

The obtained metal laminates were tested in order to determine the adhesion strength between the adhesive polymer layer and the outer metal sheets. Further, the laminates were subjected to a standard deep drawing test.

### a. Adhesion test

The adhesion between the adhesive polymer layer and the outer metal sheets was evaluated using a standard T peeling test (NF T 76112). This test was carried out as follows.

A sample of 250 mm x 25 mm is cut out of the metal laminate. Each of the two outer metal sheets is inserted between the jaws of an apparatus for measuring the elongation (model 4505 from INSTRON) capable of measuring the force necessary for a predetermined displacement. The peeling force necessary for a displacement of the jaws at a constant speed of 100 mm/min is read on the apparatus.

### b. Deep drawing test

A circular sample of the metal laminate having a diameter of 150 mm is mounted into a clamp ring having an internal diameter of 85 mm of an industrial press having a force of 0. 8 MN. The force applied on the clamp ring is 80 kN.

A spherical punch with a diameter of 37. 5 mm is applied to the center of the sample with a force of between 30 and 35 kN. The maximal penetration depth of the punch into the laminate before break is determined.

The laminates according to examples 1, 2 and 3 present a penetration depth before break identical to the one of the metal sheets alone.

The results of the tests of the polymer compositions and the metal laminates are resumed in Table 4 hereunder.

**Table 4 :**

| Properties of the polymer compositions and the metal laminates | | | | | |
|---|---|---|---|---|---|
| Sample | Maximum elongation [%] | Tensile modulus at 200°C [MPa] | Gel content [%] | Adhesion [daN/cm] | Deep drawing [mm] |
| Example 1 | 200 | 0.7 | 38 | 7 | as steel |
| Example 2 | > 100 | 0.5 | 80 | 6 | as steel |
| Example 3 | 200 | 1 | 50 | 5 | as steel |
| Example 4* | 1000 | 0 | 0 | 10 | as steel |

| | | | | | |
|---|---|---|---|---|---|
| *: prior art | | | | | |

It follows from the results that a metal laminate comprising an adhesive polymer layer based on cross-linked grafted polyethylene presents a heat resistance compatible with subsequent treatments such as cataphoresis combined with satisfactory adhesion properties.

The properties of metal laminates according to the invention are thus very satisfactory and allow their use, notably in the automotive industry for the manufacture of automotive body parts, but also in other industries such as in particular construction.

## Claims

1. A metal laminate comprising between two outer metal sheets an adhesive polymer layer, **characterised in that** the adhesive polymer layer comprises cross-linked polyethylene or a copolymer thereof, grafted with an unsaturated carboxylic acid and/or a derivative thereof.

2. Metal laminate according to claim 1, wherein the surface of the first outer metal sheet is greater than the surface of the second outer metal sheet.

3. Metal laminate according to claim 1 or 2, wherein the outer metal sheets are made of steel or aluminium.

4. Metal laminate according to any of claim 1 to 3, wherein the adhesive polymer layer comprises more than 50 % in weight of cross-linked grafted polyethylene.

5. Metal laminate according to claim 4, wherein the adhesive polymer layer comprises 80 to 95 % in weight of cross-linked grafted polyethylene.

6. Metal laminate according to any of claims 1 to 5, wherein the crosslinked polyethylene is grafted with an unsaturated carboxylic acid containing 1 to 6 carboxylic groups and/or a derivative thereof.

7. Metal laminate according to claim 6, wherein the cross-linked polyethylene is grafted with maleic acid and/or a derivative thereof.

8. Metal laminate according to claim 7, wherein the cross-linked polyethylene is grafted with maleic acid anhydride.

9. Metal laminate according to any of claims 1 to 8, wherein the adhesive polymer layer comprises 0 to 80 % in weight of high-density polyethylene.

10. Metal laminate according to claim 9, wherein the adhesive polymer layer comprises 50 to 80 % in weight of high-density polyethylene.

11. Metal laminate according to any of claims 1 to 10, wherein the adhesive polymer layer comprises 20 to 95 % in weight of elastomer.

12. Metal laminate according to claim 11, wherein the adhesive polymer layer comprises 20 to 45 % in weight of elastomer.

13. Metal laminate according to any of claims 1 to 12, wherein the adhesive polymer layer also comprises 0.5 to 10 % in weight of a copolymer of styrene and an unsaturated carboxylic acid and/or a derivative thereof.

14. Metal laminate according to claim 13, wherein the adhesive polymer layer comprises a styrene- maleic acid anhydride copolymer.

15. Metal laminate according to any of claims 1 to 14, wherein the adhesive polymer layer further comprises 0.1 to 5 % in weight of an epoxy resin.

16. Metal laminate according to any of claims 1 to 15, wherein the grafted polyethylene is cross-linked using an organosilane compound.

17. Metal laminate according to claim 16, wherein the organosilane compound is chosen from vinylalcoxysilanes, dialcoxysilanes, trialcoxysilanes or tetraalcoxysilanes.

18. Metal laminate according to any of claims 1 to 15, wherein the grafted polyethylene is cross-linked using an organic peroxo-compound.

19. Metal laminate according to claim 18, wherein the organic peroxo compound is chosen from dicumyle peroxide and tri-tert.butyl peroxide.

20. Metal laminate according to any of claims 1 to 15, wherein the grafted polyethylene is cross-linked using high energy radiation.

21. Metal laminate according to any of claims 1 to 20, wherein the adhesive polymer has a gel content of at least 15 % in weight.

22. Metal laminate according to claim 21, wherein the adhesive polymer has a gel content of at least 30 % in weight.

23. Metal laminate according to any of claims 1 to 22, wherein the polymer layer comprises an intermediate layer of cross-linked non-grafted polyethylene.

24. Process for the manufacture of a metal laminate according to any of claims 1 to 23 comprising the steps consisting in :
a. Providing a first and a second metal sheet;
b. Applying a polymer composition comprising cross-linked polyethylene grafted with an unsaturated carboxylic acid and/or a derivative thereof onto the first metal sheet;
c. Applying the second metal sheet onto the polymer layer applied onto the first metal sheet to obtain a metal laminate; and
d. Heating the metal laminate to complete the adhesion.

25. Process according to claim 24, wherein the polymer composition is previously extruded to form a polymer film.

26. Process according to claim 24, wherein the polymer film is directly extruded onto the first metal sheet.

27. Use of the metal laminate according to claims 1 to 23 for the manufacture of automotive body parts.
